# EUROPEAN PATENT APPLICATION

(11) **EP 3 670 607 A1**
(43) Date of publication of application: **24.06.2020**
(21) Application number: 18215129.0
(22) Date of filing: 21.12.2018
(51) Int. Cl.: C09B 1/00

(54) **COACERVATION PROCESS TO ENCAPSULATE ORGANIC PIGMENTS THAT SHOW IMPROVED WEATHER FASTNESS**

(71) Applicant: Clariant Plastics & Coatings Ltd, 4132 Muttenz (CH)
(72) Inventor: The designation of the inventor has not yet been filed
(74) Representative: Jacobi, Carola

(57) **Abstract**

In a first aspect, the present invention relates to an encapsulated organic pigment comprising of an organic pigment as core material and a material capable of forming microcapsules as shell material, wherein the particle size of the encapsulated pigment (core-shell-product) is in the range from 50 nm to 500 µm and the particle size distribution D 90 is < 100 µm.

## Description

### FIELD OF THE INVENTION

The present invention relates to a pigment preparation comprising an organic pigment encapsulated by a polymer for coating applications. It also relates to the process of encapsulating the pigment, formulating such a pigment composition and its use thereof in coating applications.

### BACKGROUND OF THE INVENTION

Organic pigments are very sensitive to environmental stresses such as UV light, rain, wind or oxidation. Indeed, their use for exterior applications is currently very limited due to the issues arising from the weather fastness (chemical degradation of the pigment, pigment washed out, etc.). Currently, inorganic pigments are used for external façade coatings. They have good weather fastness but they are not providing brilliant colours.

The only way to use organic pigments for external façades is to protect them from these environmental stresses. One possibility to protect them is to design a protective shell around each pigment particles that can improve the weather fastness. This can be performed using encapsulation techniques. Notably, encapsulation has been used for centuries to protect drugs, perfumes or other kind of actives.

### PRIOR ART SUMMARY

Different materials could be used to make the pigment encapsulation such as polymers or inorganic particles. Inorganic particles have the drawback that they can change the colour. Polymers are more suitable because if the refractive index of a polymer matches with the one of the pigment, the coating could be transparent and no colour loss is observed. Different techniques are available to encapsulate particles with polymers, being either via chemical or physical process. Chemical processes such as interfacial and mini-emulsion polymerisation have been widely used to encapsulate pigments (US 4937167 A; US2007227401 A1). The main drawback of these techniques is that during the reaction a lot of side molecules are created that can have a bad influence on the performance and on the volatile organic compounds (VOC) content of the final pigment dispersion.

To avoid these issues, physical processes such as coacervation could be used. It consists on a solid-liquid separation. First, one disperses the pigment powder in a solvent phase containing a polymer that enables primary particles to form. Then one mixes this phase with a water phase to create an emulsion. Then a larger volume of water is added to solubilise the solvent phase. Since the polymer is not soluble in water, it precipitates at the surface of the pigment particle. The advantage of coacervation in comparison to other methods is that one can encapsulate single particles, whereas other processes such as extrusion or kneading mainly encapsulate aggregates. If these aggregates are too big, they can definitely be an issue in the final application.

Only few patents are describing encapsulation of pigments using coacervation (US 2004202862 A; US 2009035365 A1). Moreover, in these patents, the pigments described are used for different applications than external façade coatings. Furthermore, none of those patents are establishing a clear link between the encapsulation material and the weather fastness for external façade coatings.

### DETAILED DESCRIPTION OF THE INVENTION

Definitions and requirements:

The present invention was made in view of the prior art described above, and the object of the present invention is to provide a practical method capable of encapsulating organic pigments using a polymer as well as a final composition having an effect to improve weather fastness.

According to the present invention a process is provided for preparing an encapsulated particles composition having a core material surrounded by a shell material. The core material comprises at least a pigment and the shell material comprises a polymer or a mixture of polymers.

Within the present application, the term "organic pigments" refers to coloured particles, which are of purely synthetic origin, comprised of carbon-based molecules insoluble but dispersible in the used coating formulation. Organic pigments to be encapsulated could be chosen from the following list, sorted by chemical nature and colour indices:
Azo pigments:
   C.I. Pigment Yellow 3, 12, 13, 14, 16, 17, 26, 74, 81, 83, 97, 106, 113, 120, 127, 151, 155, 174, 176, 180, 183, 188, 213, 214;
   C.I Pigment Brown 25;
   C.I. Pigment Orange 5, 36;
   C.I. Pigment Red 3, 48: 2, 48: 3, 48: 4, 52: 2, 63, 112 and 170;
Disazo pigments:
   C.I. Pigment Orange 13, 16, 34, 44, 72, 108;
   C.I. Pigment Red 37, 38, 41, 144, 166, 214, 220, 221, 242, 262;
   C.I. Pigment Yellow 93, 95 und 128;
   C.I. Pigment Brown 23 und 41;
Anthanthrone pigments:
   C.I. Pigment Red 168;
Anthraquinone pigments:
   C.I. Pigment Yellow 147, 177 und 199;
   C.I. Pigment Violet 31;
Anthrapyrimidine pigments:
   C.I. Pigment Yellow 108;
Benzimidazole pigments:
   C.I. Pigment Orange 64;
Quinacridone pigments:
   C.I. Pigment Orange 48 und 49;
   C.I. Pigment Red 122, 192, 202, 206, 207 und 209;
   C.I. Pigment Violet 19, 42;
Quinophtalone pigments:
   C.I. Pigment Yellow 138;
Diketopyrrolopyrrole pigments:
   C.I. Pigment Orange 71, 73 und 81;
   C.I. Pigment Red 254, 255, 264, 270 und 272;
Dioxazine pigments:
   C.I. Pigment Violet 23 und 37;
   C.I. Pigment Blue 80;
Flavanthrone pigments:
   C.I. Pigment Yellow 24;
Indanthrone pigments:
   C.I. Pigment Blue 60 und 64;
Isoindoline pigments:
   C.I. Pigment Orange 69;
   C.I. Pigment Red 260;
   C.I. Pigment Yellow 139 und 185;
Isoindolinone pigments:
   C.I. Pigment Orange 61;
   C.I. Pigment Yellow 109, 110 und 173;
Isoviolanthrone pigments:
   C.I. Pigment Violet 31;
Metal complex pigments:
   C.I. Pigment Red 257;
   C.I. Pigment Yellow 117, 129, 150, 153 und 177;
   C.I. Pigment Green 8;Naphtol pigments:
   C.I. Pigment Orange 2;
   C.I. Pigment Red 1, 4, 6;
Perinone pigments:
   C.I. Pigment Orange 43;
   C.I. Pigment Red 194;
Perylene pigments:
   C.I. Pigment Black 31 und 32;
   C.I. Pigment Red 123, 149, 178, 179, 190 und 224;
   C.I. Pigment Violet 29;
Phthalocyanine pigments:
   C.I. Pigment Blue 15, 15:1, 15:2, 15:3, 15:4, 15:6 und 16;
   C.I. Pigment Green 7 und 36;
Pyranthrone pigments:
   C.I. Pigment Orange 51;
   C.I. Pigment Red 216;
Pyrazoloquinazolone pigments:
   C.I. Pigment Orange 67;
   C.I. Pigment Red 251;
Thioindigo pigments:
   C.I. Pigment Red 88 und 181;
   C.I. Pigment Violet 38;
Triarylcarbonium pigments:
   C.I. Pigment Blue 1, 61 und 62;
   C.I. Pigment Green 1;
   C.I. Pigment Red 81, 81:1 und 169;
   C.I. Pigment Violet 1, 2, 3 und 27;
   C.I. Pigment Black 1 (Aniline black);
   C.I. Pigment Yellow 101 (Aldazine yellow);
   C.I. Pigment Brown 22.

Preferred class of pigments are azo pigments, diketopyrrolopyrrole pigments, isoindolinone pigments and phthalocyanine pigments.

Moreover, the same process could also be used to encapsulate any kind of non-pigment particles such as phosphor-containing flame retardants or UV absorbers.

According to the present invention a process is provided for preparing an encapsulated particles composition having a core material surrounded by a shell material. Materials capable of forming microcapsules include, but are not limited to, the following: starch, dextrin, gelatine, arabic gum, alginate, carrageenan, xanthan gum, agar-agar, pectin, casein, colloidal albumins, paraffin wax, natural waxes such as carnauba wax, beeswax, candelilla wax, sumac wax, blends of polyethylene and cellulose or ethyl cellulose, cellulose acetophthalate, cellulosic resins, hydrolysed cellulose esters, gelatine derivatives of which gelatine is the main radical, styrene maleic acid copolymers, styrene-butadiene rubbers, acrylic resins, allylic resins, amino resins, epoxy resins, fluoroplastic resins, furan polymers, ionomer resins, nitrile barrier resins, nylon polymers, phenolic resins, phenylene oxide based resins, polyamide-imide resins, polyvinyl polymers and resins, hydrolysed polyvinyl acetate, polyvinyl alcohol and vinyl alcohol polymers containing urethane carboxylic acid groups, polyacrylamides, imidised polyacrylamides, polymerised acrylonitrile, acetal copolymers and homopolymers, polyaryl ethers, polyethylene amide, polysulfonamide, polyaryl sulfones, polybutadienes, polybutylenes, polycarbonates, polyesters, polyethersulfones, polyethylenes, polyamides, polyimides, polyphenylene sulfides, polypropylenes, polystyrenes, polysulfones, polyurethanes, polyureas, silicones, salts of heavy metal cellulose sulfates, polyoxymethylene urea, melamine-modified polyoxymethylene urea and mixtures thereof. Preferred are synthetic polymers and particularly preferred are polysulfones, polyurethanes and mixtures thereof.

### Process description

The full encapsulation process comprises four steps. All these steps could be carried out at temperatures from 5 to 80°C but most likely at room temperature.

The first step consists in dispersing an appropriate amount of pigment in a solvent phase containing the polymer used for the encapsulation. Pigment type is chosen from the previous list. The pigment content in the solvent phase is from about 1% to about 70%, preferably from about 3% to about 60%, more preferably from about 5% to about 40% and most preferably from 7% to 30% by weight.

The polymer or mixtures thereof used in the first step of the encapsulation process could be chosen from the previous list described in [11]. The polymer concentration in the solvent phase is from about 0.1% up to 50%, preferably up to 40%, most preferably up to 30% by weight.

The solvent phase mentioned in the first step of the encapsulation process is chosen to solubilise the polymer and be at least partly soluble in water. The following suitable solvent classes may be part of the solvent phase: aliphatic and cyclic alcohols, aromatic and aliphatic hydrocarbons, ethers, aliphatic carboxylic acid esters, lactones, aliphatic and alicyclic ketones, aromatic hydrocarbons and halogenated derivatives of these solvents and chlorinated aliphatic hydrocarbons. Practical examples of these solvents are tetrahydrofuran, dimethyl sulfoxide, dimethylformamide, dimethylacetamide, N-methylpyrrolidone, ethanol, propanol, isobutanol, n-butanol, ethyl acetate, propyl acetate, butyl acetate, toluene, xylene, dichloromethane, dimethylformamide, acetone, cyclohexanone, hexafluoroacetone, hexafluoro-2-propanol, dichloromethane, chloroform and mixtures thereof. More specifically, preferred solvents are tetrahydrofuran, dimethyl sulfoxide, cyclohexanone and mixtures thereof.

Moreover one or several dispersing agents are used in the first step of the encapsulation process in order to properly disperse the pigment in the solvent phase. Usual dispersing agents known in the state of the art can be employed, for instance alcohol ethoxylates, oxo-alcohol ethoxylates, alkylphenol ethoxylates, ethylene oxide-propylene oxide block copolymer surfactants, fatty alcohol alkoxylates, end-capped alcohol alkoxylates, fatty acid ethoxylates, fatty acid ester ethoxylates, sodium ester sulfates, phosphate esters, polyether phosphates, ether carboxylates, polyacrylate copolymers, fatty acid condensates, fatty amines, polymeric surfactants and mixtures thereof. Preferred are polyether phosphates, fatty alcohol ethoxylates, polyacrylate copolymers and mixtures thereof.

The content of the dispersing agent or mixtures thereof mentioned in [16] and present in the solvent phase is in the range 0.1% up to 30% but most likely between 0.5% and 20% by weight.

The first step of the encapsulation process could be accomplished in an ultrasonicator, a media mill using milling beads, a horizontal mini mill, a rotor-stator apparatus, a colloid mill, an attritor, a high pressure homogeniser, a magnetic stirrer or in a microfluidiser. Combinations of dispersing equipment may be used. Mixing time could vary from few minutes to 3 hours.

The encapsulation process comprises a second step consisting in emulsifying the pigment dispersion in a water phase. The final mixture could be seen as a solvent-in-water emulsion. The final emulsion has a solvent content from about 5% to about 80%, preferably from about 20% to about 74% and most preferably from 40% to about 70% by weight.

In order to form the emulsion described in the second step of the encapsulation process, one or several electrolytes are added to the water phase to enhance solvent insolubility in the water phase. Usual electrolytes known in the state of the art can be employed. Preferred electrolytes are ionic salts comprising an alkali metal, ionic salts comprising an alkaline earth metal and mixtures thereof, and most preferred are sodium chloride, ammonium chloride, ammonium phosphate, sodium phosphate and mixtures thereof.

The content of electrolytes or mixtures thereof described in [20], present in the water phase is from 1% to 40%, more likely from 2% to 30% and most likely from 3% to 25% by weight.

Moreover one or several emulsifiers are used in order to obtain the desired emulsion described in the second step of the encapsulation process. Usual emulsifiers known in the state of the art can be employed, such as alcohol ethoxylates, oxo-alcohol ethoxylates, alkylphenol ethoxylates, ethylene oxide-propylene oxide block copolymer surfactants, alcohol ethoxylates, fatty acid ethoxylates, fatty acid ester ethoxylates, fatty acid esters of polyethylene glycols, polyglycerol esters, sulfonation products, sulfate esters sodium and ammonium salts, sulfosuccinic acid derivatives, phosphate esters, ether carboxylates, fatty acids condensates, alkyl benzene sulfonates, fatty amines, alkyl dimethyl amines, fatty alkyl diamines, fatty amine ethoxylates, polymeric surfactants and mixtures thereof. Preferred emulsifiers are anionic or non-ionic substances based on ethylene oxide-propylene oxide units like fatty acid ester ethoxylates, alcohol alkoxylates and mixtures thereof.

The content of emulsifiers or mixtures thereof described in [22], present in the emulsion described in [19], could be chosen between 0.1% and 40%, more likely between 0.5% and 30% and most likely between 1% and 20% by weight.

The second step of the encapsulation process could be accomplished in an ultrasonicator, a media mill using milling beads, a horizontal mini mill, a rotor-stator apparatus, a colloid mill, an attritor, a high pressure homogeniser, a magnetic stirrer or in a microfluidiser. Combinations of dispersing equipment may be used. Mixing time could vary from few minutes to 3 hours.

The encapsulation process comprises a third step whereby more water is added to the emulsion while the emulsion is continuously stirred. This aims at diluting the electrolyte concentration and hence solubilising the solvent in water. Thereafter the encapsulation polymer, being insoluble in water, precipitates randomly at the surface of the pigment particles.

The excess water mentioned in [25] during the third step of the emulsification process could be added once or by dosage. Standard dosing rates are from 1 to 30 mL per minute. The dosage could last from few minutes to 3 hours.

The product resulting from the third step of the encapsulation process described in [25] can be seen as a suspension of encapsulated pigment particles. The continuous phase contains the solubilised solvent or mixtures thereof described in [15], an electrolyte or mixtures thereof described in [20], and also a dispersing agent or mixtures thereof described in [16] and an emulsifier or mixtures thereof described in [22].

The pigment particles present in the suspension obtained at the end of the third step of the encapsulation process and mentioned in [27] can be seen as core shell particles, whereby the pigment particle is the core and the encapsulation polymer is the shell. They could be fully or partially covered by the encapsulation polymer or mixtures thereof with a protection layer from few nanometers to few microns. These core-shell particles have a final particle size from 50 nm to 500 µm, more likely from 100 nm to 100 µm and most likely from 200 nm to 10 µm.

Some pigment particles present in the suspension obtained at the end of the third step of the encapsulation process mentioned in [27] could also be uncovered by the encapsulation polymer. With this process 90% of the pigment is encapsulated, preferably 99%.

Some pigment particles present in the suspension obtained at the end of the third step of the encapsulation process mentioned in [27] could also be pigment particles aggregates, whereby the encapsulation polymer acts as a sticker between the particles. Pigment aggregates could have sizes in the range from 50 nm to 500 µm, more likely from 100 nm to 100 µm and most likely from 200 nm to 10 µm.

The forth step of the encapsulation process consists in removing the solubilised solvent or mixtures thereof described in [15] and the electrolyte or mixtures thereof described in [20] from the suspension obtained at the end of the third step of the encapsulation process mentioned in [27] in order to avoid their presence in the final composition. For this purpose, different processes could be used such as membrane filtration, centrifugation or heating. The process of interest is centrifugation. Common centrifugation rates to separate encapsulated pigment from the rest of the solution are in the range 100 to 10000 rpm with centrifugation time from 1 to 20 minutes. After centrifugation a concentrated material is obtained that is separated from the supernatant containing the solubilised solvent or mixtures thereof described in [15], the electrolyte or mixtures thereof described in [20], and could also contain the dispersing agent or mixtures thereof described in [16] and the emulsifier or mixtures thereof described in [22].

The concentrated material described in [31] could still entail rests of the solubilised solvent or mixtures thereof described in [15] and the electrolyte or mixtures thereof described in [20], therefore the concentrated material should be further processed to remove them. Basically fresh water is mixed with the concentrated material and the homogeneous mixture is then centrifuged using the process described in [31]. Several washing cycles might be necessary to fully remove solubilised solvents and electrolytes. Generally a water amount up to 2 L and less than 10 washing cycles are necessary to remove all the above mentioned compounds. The final cleaned concentrated material generally entails a water content between 30% and 70% by weight.

The final cleaned concentrated material obtained after several washing cycles and described in [32] could also be further processed in an oven dryer to get encapsulated pigment particles powder. Typical drying is done at temperatures between 40 and 80°C for 1 to 12 hours.

The powder of encapsulated pigment described in [33] can be re-dispersed in a solvent phase to make a dispersion, using one or several dispersing agents described in [16] in the same concentration range as described in [17]. Typical solvent phases are esters of a mono or dicarboxylic acid, polyether polyol, butyl glycol, xylol, xylene, toluene, butanone, cyclohexanone, White Spirit, silicon oils, paraffin oils, linseed oil, coconut oil, isoparaffinic hydrocarbons, phthalate derivatives, mono or diacrylate derivatives, mixtures thereof or water, and preferred solvent phase is water.

The final cleaned concentrated material obtained in [32] or the encapsulated pigment particle powder dispersed in a water phase described in [34] can be then seen as an encapsulated pigment dispersion.

For conventional purposes, additives such as biocides, humectants, chelating agents, colour improvers and viscosity modifiers, are generally added to the water phase of the encapsulated pigment dispersions mentioned in [35]. Preferred additives are biocides and humectants. This encapsulated pigment dispersion containing additives is described as final composition or pigment preparation.

Humectants are present in the final composition described in [36] at concentrations below 20% and most preferably below 15% by weight. Usual humectants are for instance glycol derivatives like propylene glycol, hexylene glycol or butylene glycol, alpha hydroxy acids such as lactic acid or glyceryl triacetate, polymeric polyols such as polydextrose or sodium hexametaphosphate, sugar alcohols such as glycerol, sorbitol, xylitol or maltitol and mixtures thereof.

Biocides are present in the final composition described in [36] at concentrations below 2000 ppm and most likely below 1500 ppm. Usual biocides are for instance isothiazoles, isothiazolinone, carbamates and mixtures thereof.

The final composition described in [36] has an encapsulated pigment particles content range between 1% and 70%, more preferably between 10% and 60% and most preferably between 20% and 50% by weight.

The final composition described in [36] entails encapsulated pigment particles having a size distribution of D90 < 100 µm and more likely D90 < 10 µm.

### Application and benefits provided by the invention

The final composition according to the present invention is used for exterior decorative coating, interior decorative coating, automotive coating and industrial application coating, but most preferably for exterior decorative coating.

The final composition according to the present invention could be applied in different kind of coating systems. Examples of coating systems include but are not limited to silicone based coatings and silicate paints, acrylic coatings, styrene-acrylic coatings, alkyd coatings and titan dioxide dispersions.

The final composition according to the present invention could also be applied in a lacquer system or a varnish.

Based on accelerated weather fastness tests using an accelerated testing equipment, which exposes the tested coating formulations through different weather cycles varying temperature, humidity and UV intensity, when the final composition is applied in one of the coating systems described in [42], the resulting colour presents increased weather fastness compared to the same coating system entailing a pigment preparation containing the corresponding non-encapsulated organic pigments. Details of this accelerated weather fastness test are described below.

Notably, the final composition presenting increased weather fastness (ISO 16474-2, Paints and varnishes - Methods of exposure to laboratory light sources - Part 2: Xenon-arc lamps) in silicone based coatings entails a dE ≤ 7, more preferably dE ≤ 6 and most preferably dE ≤ 5 after 2000 hours accelerated weather fastness (see Table 2). dE refers to the International Commission on Illumination (CIE) based on their CIELAB colour space and is measured according to DIN EN ISO 11664-4.

To study the oxidation fastness, the final composition containing the encapsulated pigment is applied in a spackling paste chosen for its extreme oxidative character and placed for 6 weeks in an oven dryer at 50°C. It was observed that the composition containing encapsulated pigments is more resistant to oxidation compared to the spackling paste entailing a similar composition containing the corresponding non-encapsulated organic pigments.

Notably, the resulting colour of the final composition, when applied in a spackling paste and left for 6 weeks in an oven dryer at 50°C, does not lose more than 40% and most likely more than 20% of its initial colour strength. Moreover, the final composition presents a dE ≤ 3, more preferably dE ≤ 2.5 and most preferably dE ≤ 2 after 6 weeks in an oven dryer at 50°C (See Table 3).

### EXAMPLES

### Example 1:

8 g of Ultrason® S 6010 (BASF) are dissolved in 275.2 g of tetrahydrofuran/dimethyl sulfoxide (95/5) mixture for 2 hours under magnetic stirring. Then 32 g of powder of diketopyrrolopyrrole pigment (Hostaperm® Red D3G 70, Clariant) and 4.8 g TEGO® Dispers 653 (Evonik) under magnetic stirring overnight. To 205.6 g of this solution, 98.4 g of a solution of NaCl (20% by weight) and 16 g Emulsogen® EL 540 (Clariant) are added and mixed using an ULTRA-TURRAX® (T18, IKA) for 2 minutes at 19000 rpm. 50 g of the resulting red emulsion is then poured into a 4 L flask and 500 mL water are added dropwise for 90 minutes. The resulting dispersions are then gathered into a 750 mL-centrifuge bottle and centrifuged 5 minutes at 3500 rpm (Varifuge 3.0, Heraeus). The supernatant is then removed and 200 mL distilled water is then added to the bottle and homogenised for 30 seconds at 3000 rpm using a vortex (IKA™ Vortex 4 digital, IKA). The new dispersion is then re-centrifuged at 3500 rpm for 5 minutes and the supernatant discarded. This operation is repeated 2 times. The resulting concentrated material is then placed in an oven dryer overnight. 25 g of the resulting encapsulated pigment powder is then mixed in 73 g distilled water and 2 g of Dispersogen® PTS (Clariant) for 2 minutes using a magnetic stirrer. The final dispersion is then ready to be applied in a coating system.

### Example 2:

16 g of Ultrason® S 6010 (BASF) are dissolved in 230.4 g of tetrahydrofuran/dimethyl sulfoxide (95/5) mixture for 2 hours under magnetic stirring. Then 64 g of powder of diketopyrrolopyrrole pigment (Hostaperm® Red D3G 70, Clariant) and 9.6 g TEGO® Dispers 653 (Evonik) under magnetic stirring overnight. To 205.6 g of this solution, 98.4 g of a solution of NaCl (20% by weight) and 16 g Emulsogen® EL 540 (Clariant) are added and mixed using an ULTRA-TURRAX® (T18, IKA) for 2 minutes at 19000 rpm. 50 g of the corresponding red emulsion is then poured into a 4 L flask and 500 mL water are added dropwise for 90 minutes. The resulting dispersion is then poured in a 750 mL-centrifuge bottles and centrifuged 10 minutes at 3500 rpm (Varifuge 3.0, Heraeus). The supernatant is then removed and 200 mL distilled water is then added to the bottle and homogenised for 30 seconds at 3000 rpm using a vortex (IKA™ Vortex 4 digital, IKA). The new dispersion is then re-centrifuged at 3500 rpm for 5 minutes and the supernatant discarded. This operation is repeated 2 times. The resulting concentrated material is then placed in an oven dryer overnight. 25 g of the resulting encapsulated pigment powder is then mixed in 73 g distilled water and 2 g of Dispersogen® PTS (Clariant) for 2 minutes using a magnetic stirrer. The final dispersion is then ready to be applied in a coating system.

### Example 3:

16 g of Ultrason® S 6010 (BASF) are dissolved in 230.4 g of tetrahydrofuran/dimethyl sulfoxide (95/5) mixture for 2 hours under magnetic stirring. Then 64 g of powder of diketopyrrolopyrrole pigment (Hostaperm® Red D3G 70, Clariant) and 9.6 g TEGO® Dispers 653 (Evonik) under magnetic stirring overnight. To 257 g of this solution, 123 g of a solution of NaCl (6% by weight) and 20 g Emulsogen® EL 540 (Clariant) are added and mixed using an ULTRA-TURRAX® (T18, IKA) for 2 minutes at 19000 rpm. 200 g of the corresponding red emulsion is then poured into a 4 L flask and 400 mL water are added dropwise for 75 minutes. The resulting dispersion is then poured in a 750 mL-centrifuge bottles and centrifuged 10 minutes at 3500 rpm (Varifuge 3.0, Heraeus). The supernatant is then removed and 200 mL distilled water is then added to the bottle and homogenised for 30 seconds at 3000 rpm using a vortex (IKA™ Vortex 4 digital, IKA). The new dispersion is then re-centrifuged at 3500 rpm for 5 minutes and the supernatant discarded. This operation is repeated 2 times. The resulting concentrated material is then placed in an oven dryer overnight. 25 g of the resulting encapsulated pigment powder is then mixed in 73 g distilled water and 2 g of Dispersogen® PTS (Clariant) for 2 minutes using a magnetic stirrer. The final dispersion is then ready to be applied in a coating system.

### Example 4:

16 g of Ultrason® S 6010 (BASF) are dissolved in 230.4 g of tetrahydrofuran/dimethyl sulfoxide (95/5) mixture for 2 hours under magnetic stirring. Then 64 g of powder of diketopyrrolopyrrole pigment (Hostaperm® Red D3G 70, Clariant) and 9.6 g TEGO® Dispers 653 (Evonik) under magnetic stirring overnight. To 205.6 g of this solution, 98.4 g of a solution of NaCl (6% by weight) and 16 g Emulsogen® EL 540 (Clariant) are added and mixed using an ULTRA-TURRAX® (T18, IKA) for 2 minutes at 19000 rpm. 200 g of the corresponding red emulsion is then poured into a 4 L flask and 400 mL water are slowly poured to it through a funnel within one minute. The resulting dispersion is then poured in a 750 mL-centrifuge bottles and centrifuged 10 minutes at 3500 rpm (Varifuge 3.0, Heraeus). The supernatant is then removed and 200 mL distilled water is then added to the bottle and homogenised for 30 seconds at 3000 rpm using a vortex (IKA™ Vortex 4 digital, IKA). The new dispersion is then re-centrifuged at 3500 rpm for 5 minutes and the supernatant discarded. This operation is repeated 2 times. The dried content of the resulting concentrated material is then analysed using a moisture balance (Sartorius MA160/120°C/MA35-Mode). In our case, it was found that the drying content was 43.1% by weight. Then 68 g of the resulting concentrated material was mixed with 7.1 g Dispersogen® PTS (Clariant) and 42.1 g of distilled water for 2 minutes using a magnetic stirrer. The final dispersion is then ready to be applied in a coating system.

### Example 5:

12.8 g of Ultrason® S 6010 (BASF) are dissolved in 233.6 g of tetrahydrofuran/dimethyl sulfoxide (95/5) mixture for 2 hours under magnetic stirring. Then 64 g of powder of diketopyrrolopyrrole pigment (Hostaperm® Red D3G 70, Clariant) and 9.6 g TEGO® Dispers 653 (Evonik) under magnetic stirring overnight. To 205.6 g of this solution, 98.4 g of a solution of NaCl (6% by weight) and 16 g Emulsogen® EL 540 (Clariant) are added and mixed using an ULTRA-TURRAX® (T18, IKA) for 2 minutes at 19000 rpm. 200 g of the corresponding red emulsion is then poured into a 4 L flask and 400 mL water are slowly poured to it through a funnel within one minute. The resulting dispersion is then poured in a 750 mL-centrifuge bottles and centrifuged 10 minutes at 3500 rpm (Varifuge 3.0, Heraeus). The supernatant is then removed and the resulting concentrated material is then mixed with 400 mL distilled water with a paddle at 300 rpm for 1 hour and centrifuged again using the same conditions. This operation is repeated one more time. The dried content of the resulting concentrated material is then analysed using a moisture balance (Sartorius MA160/120°C/MA35-Mode). In our case, it was found that the drying content was 40% by weight. Then 71.4 g of the resulting concentrated material was mixed with 6.92 g Dispersogen® PTS (Clariant) and 35.92 g of distilled water for 2 minutes using a magnetic stirrer. The final dispersion is then ready to be applied in a coating system.

### Example 6:

6.4 g of Ultrason® S 6010 (BASF) are dissolved in 240 g of tetrahydrofuran/dimethyl sulfoxide (95/5) mixture for 2 hours under magnetic stirring. Then 64 g of powder of diketopyrrolopyrrole pigment (Hostaperm® Red D3G 70, Clariant) and 9.6 g TEGO® Dispers 653 (Evonik) under magnetic stirring overnight. To 205.6 g of this solution, 98.4 g of a solution of NaCl (6% by weight) and 16 g Emulsogen® EL 540 (Clariant) are added and mixed using an ULTRA-TURRAX® (T18, IKA) for 2 minutes at 19000 rpm. 200 g of the corresponding red emulsion is then poured into a 4 L flask and 400 mL water are added dropwise for 90 minutes. The resulting dispersion is then poured in a 750 mL-centrifuge bottles and centrifuged 10 minutes at 3500 rpm (Varifuge 3.0, Heraeus). The supernatant is then removed and 200 mL distilled water is then added to the bottle and homogenised for 30 seconds at 3000 rpm using a vortex (IKA™ Vortex 4 digital, IKA). The new dispersion is then re-centrifuged at 3500 rpm for 5 minutes and the supernatant discarded. This operation is repeated 2 times. The resulting concentrated material is then placed in an oven dryer overnight. 25 g of the resulting encapsulated pigment powder is then mixed in 73 g distilled water and 2 g of Dispersogen® PTS (Clariant) for 2 minutes using a magnetic stirrer. The final dispersion is then ready to be applied in a coating system.

### Example 7:

3.2 g of Desmopan 9370A (Covestro) are dissolved in 278.4 g of tetrahydrofuran/dimethyl sulfoxide (95/5) mixture for 2 hours under magnetic stirring. Then 32 g of powder of diketopyrrolopyrrole pigment (Hostaperm® Red D3G 70, Clariant) and 6.4 g TEGO® Dispers 653 (Evonik) under magnetic stirring overnight. To 205.6 g of this solution, 98.4 g of a solution of NaCl (20% by weight) and 16 g Emulsogen® EL 540 (Clariant) are added and mixed using an ULTRA-TURRAX® (T18, IKA) for 2 minutes at 19000 rpm. 200 g of the corresponding red emulsion is then poured into a 4 L flask and 400 mL water are added dropwise for 90 minutes. The resulting dispersion is then poured in a 750 mL-centrifuge bottles and centrifuged 10 minutes at 3500 rpm (Varifuge 3.0, Heraeus). The supernatant is then removed and 200 mL distilled water is then added to the bottle and homogenised for 30 seconds at 3000 rpm using a vortex (IKA™ Vortex 4 digital, IKA). The new dispersion is then re-centrifuged at 3500 rpm for 5 minutes and the supernatant discarded. This operation is repeated 2 times. The resulting concentrated material is then placed in an oven dryer overnight. 25 g of the resulting encapsulated pigment powder is then mixed in 73 g distilled water and 2 g of Dispersogen® PTS (Clariant) for 2 minutes using a magnetic stirrer. The final dispersion is then ready to be applied in a paint system.

All the samples are then tested in a silicone based coating (Thermosan NQG, DAW) and their colour strength is compared to a standard. The standard corresponds to a commercial product (Colanyl® Red D3GD 500, Clariant) containing the same pigment as in the Examples 1-7, whereby the pigment is not encapsulated by a polymer. Each encapsulated pigment preparation (Examples 1-7), as well as the standard, is then mixed with Thermosan NQG in a way that the final coloured coating has a pigment or encapsulated pigment content of 0.5% by weight. Mixing is achieved for 3 minutes at 3500 rpm using a SpeedMixer™ (DAC 150.1 FVZ, Hauschild Engineering). The coloured coating is then applied on a test card (Chromolux® 200) using a film applicator with 200 µm gap height (RK K Control Coater, Erichsen). The test card is then let dry at 40°C for approximatively 25 minutes and then at room temperature for 40 minutes. When the coating is dried on the card, the colour strength is then measured in comparison to Colanyl® Red D3GD 500 using a colorimeter (Datacolor® remission spectrophotometer Spectraflash SF 600 PLUS CT, Datacolor International). In addition, the particle size distribution for all the samples was measured using a Mastersizer 2000 (Malvern). All the results of particle size distribution and colour strength are then summarised in Table 1.

**Table 1: Properties of encapsulated pigments preparations**

| Examples | Colour strength in Thermosan NQG (silicone based coating) (%) vs. Colanyl® Red D3GD 500 | D50 (µm) | D90 (µm) |
|---|---|---|---|
| Colanyl® Red D3GD 500 (comparative example with non-encapsulated pigment) | 100 | 0.19 | 0.36 |
| Example 1 | 60 | 0.71 | 2.14 |
| Example 2 | 64 | 0.30 | 2.33 |
| Example 3 | 48 | 0.26 | 1.56 |
| Example 4 | 54 | 0.98 | 2.26 |
| Example 5 | 57 | 0.90 | 2.06 |
| Example 6 | 67 | 0.84 | 1.85 |
| Example 7 | 31 | 3.39 | 7.15 |

Table 1 shows the characteristics of encapsulated pigment preparations (Examples 1 - 7) compared to a non-encapsulated pigment preparation (Colanyl® Red D3GD 500). Due to the presence of the polymer on the surface of the pigment, the particle size increases (D50 and D90 values) and the colour strength decreases compared to the non-encapsulated pigment preparation. D50 and D90 represent the average particle size, which is the intercepts for 50% and 90% of the cumulative mass respectively. The colour strength mentioned in the table refers to the % of deviation for the sample to be measured with regards to the standard (Colanyl® Red D3GD 500). A value below 100% means weaker colour strength.

### Weather fastness tests:

1/3 and 1/25 of standard depth are considered for the weather fastness tests performed using a silicon based coating (Thermosan NQG, DAW). For instance 1/25 standard depth means that 1 part of coloured pigment preparations must be mixed with the necessary amount of Thermosan NQG to reach 1/25 of the depth of a defined standard (Colanyl® Red D3GD 500, Clariant). When the right dosage is found, the coloured coating is then applied onto a weather fastness plaque and put in the Ci5000 Weather-Ometer® (Atlas) for at least 2000 hours following the standard weather fastness circle ISO 16474-2 (Paints and varnishes - Methods of exposure to laboratory light sources - Part 2: Xenon-arc lamps). All the changes in coloristic (dE) are measured over time using a colorimeter (Datacolor® remission spectrophotometer Spectraflash SF 600 PLUS CT, Datacolor international) and summarised in Table 2.

**Table 2: Weather fastness results - Change in coloristic (dE) over time**

| Examples | dE in Thermosan NQG (silicone based coating) after | | | |
|---|---|---|---|---|
| | 500h | 1000h | 1500h | 2000h |
| Colanyl® Red D3GD 500 (comparative example with non-encapsulated pigment) | 2.6 | 4.8 | 7.8 | 10.7 |
| Example 1 | 1.2 | 0.7 | 1.0 | 2.6 |
| Example 2 | 1.3 | 0.6 | 1.3 | 2.3 |
| Example 3 | 1.0 | 0.8 | 1.0 | 2.0 |
| Example 4 | 0.9 | 0.7 | 2.0 | 4.3 |
| Example 5 | 0.9 | 0.9 | 2.4 | 4.2 |
| Example 6 | 1.0 | 0.7 | 1.8 | 3.7 |
| Example 7 | 1.5 | 1.1 | 0.8 | 2.2 |

Table 2 clearly demonstrates the improvement in weather fastness of the encapsulated organic pigments (Examples 1-7) compared to the non-encapsulated one (Colanyl® Red D3GD 500). Due to the presence of the polymer on the surface of the pigment, the degradation of the colour for the encapsulated pigment is slower compared to this of the non-encapsulated one. This is represented through the slower increase in dE with time compared to Colanyl® Red D3GD 500. For this test, dE is measured against a reference, being the same sample that has been left at room temperature.

### Oxidation tests

A spackling paste (StuccoDecor Di Luce, DAW) is chosen for its extreme oxidative character to assess the resistance against oxidation of the encapsulated pigments contained in Examples 1-7 compared to the non-encapsulated pigment contained in the standard (Colanyl® Red D3GD 500, Clariant). Each encapsulated pigment preparation (Examples 1-7), as well as the standard, is then mixed with StuccoDecor Di Luce in a way that the final coloured coating has a pigment or encapsulated pigment content of 1.5% by weight. Mixing is achieved for 2 minutes at 3000 rpm using a SpeedMixer™ (DAC 150.1 FVZ, Hauschild Engineering). The coloured coating is then applied onto a card using a film applicator with 200 µm gap height (RK K Control Coater, Erichsen) and dried at room temperature. The card are then placed in an oven dryer at 50°C for 6 weeks. All the changes in coloristic (dE) and colour strength are measured after 3 and 6 weeks using a colorimeter (Datacolor® remission spectrophotometer Spectraflash SF 600 PLUS CT, Datacolor International) and summarised in the Table 3.

**Table 3: Results on resistance against oxidation - change in coloristic (dE) over time**

| Examples | 3 weeks | | 6 weeks | |
|---|---|---|---|---|
| | Colour Strength (%) | dE | Colour Strength (%) | dE |
| Colanyl® Red D3GD 500 (comparative example with non-encapsulated pigment) | 65 | 1.7 | 38 | 3.7 |
| Example 1 | 96 | 0.2 | 90 | 0.2 |
| Example 2 | 96 | 0.1 | 87 | 0.1 |
| Example 3 | 96 | 0.1 | 89 | 0.1 |
| Example 4 | 92 | 0.8 | 87 | 1.5 |
| Example 5 | 93 | 0.7 | 88 | 1.4 |
| Example 6 | 94 | 0.5 | 86 | 1.4 |
| Example 7 | 96 | 0.1 | 92 | 0.1 |

Table 3 clearly demonstrates the improvement against oxidation of the encapsulated organic pigments compared to the non-encapsulated one (Colanyl® Red D3GD 500). Due to the presence of the polymer on the surface of the pigment, the degradation of the colour for the encapsulated pigment is slower compared to the non-encapsulated one. This is represented through the slower decrease of colour strength and dE after 6 weeks for Examples 1-7 compared to Colanyl® Red D3GD 500. For this test, the colour strength and dE are measured against a reference, being the same sample that has been left at room temperature. A value below 100% means weaker colour strength.

## Claims

1. Encapsulated organic pigment comprising of an organic pigment as core material and a material capable of forming microcapsules as shell material, wherein the particle size of the encapsulated pigment (core-shell-product) is in the range from 50 nm to 500 µm and the particle size distribution D 90 is < 100 µm.

2. Encapsulated organic pigment according to claim 1, wherein the shell material is a synthetic polymer.

3. Encapsulated organic pigment according to claim 2, wherein the shell material is a polymer selected from the group: polysulfone, polyurethane and mixtures thereof.

4. Encapsulated organic pigment according to one or more of claims 1 to 3, wherein the organic pigment is selected from the group of azo pigments, diketopyrrolopyrrole pigments, isoindolinone pigments and phthalocyanine pigments.

5. Encapsulated organic pigment according to one or more of claims 1 - 4, wherein the encapsulated organic pigment has an improved weather fastness (measured according to ISO 16474-2, Paints and varnishes - Methods of exposure to laboratory light sources - Part 2: Xenon-arc lamps) in silicone based coatings with a dE ≤ 5 after 2000 h.

6. Encapsulated organic pigment according to one or more of claims 1 - 5, wherein the encapsulated organic pigment has an improved oxidation fastness with dE ≤ 2 after six weeks in a spackling oxidative paste at 50°C.

7. Encapsulated organic pigment dispersion comprising an encapsulated pigment according to one or more of claims 1 - 6, wherein the encapsulated organic pigment is dispersed in a solvent and the concentration of the pigment in the dispersion is 1 - 70 % by weight.

8. Encapsulated organic pigment dispersion according to claim 8, wherein the solvent is selected from the group of esters of a mono or dicarboxylic acid, polyether polyol, butyl glycol, xylol, xylene, toluene, butanone, cyclohexanone, White Spirit, silicon oils, paraffin oils, linseed oil, coconut oil, isoparaffinic hydrocarbons, phthalate derivatives, mono or diacrylate derivatives, mixtures thereof and/or water.

9. Encapsulated organic pigment dispersion according to claim 8, wherein the solvent is water.

10. Encapsulated organic pigment dispersion according to one or more of claims 7 - 9, wherein the dispersion comprises further additives from the group biocides, humectants, chelating agents, colour improvers and viscosity modifiers

11. Process for the preparation of an encapsulated organic pigment dispersion according to claim 7, comprising the steps of
1. Dispersing a pigment in a solvent, which is at least partially soluble in water, comprising a material capable of forming microcapsules, in the presence of a dispersing agent
2. then emulsifying the pigment dispersion in a water phase in the presence of one or more emulsifiers and electrolytes;
3. Adding water to the continuously stirred emulsion and thereby precipitating the encapsulated pigment;
4. Removing the solubilised solvent or solvent mixtures and electrolytes from the suspension obtained and remix the resulting material in a water or solvent phase.

12. Process for the preparation of an encapsulated organic pigment according to claim 1, comprising the steps of
1. Dispersing a pigment in a solvent, which is at least partially soluble in water, comprising a material capable of forming microcapsules in the presence of a dispersing agent;
2. then emulsifying the pigment dispersion in a water phase in the presence of one or more emulsifiers and electrolytes;
3. Adding water to the continuously stirred emulsion and thereby precipitating the encapsulated pigment;
4. Removing the solubilised solvent or solvent mixtures and electrolytes from the suspension obtained
5. and further drying the resulting material comprising the encapsulated pigment at a temperature in the range of 40 to 80°C, obtaining an encapsulated pigment in powder form.

13. Use of an encapsulated organic pigment powder or an encapsulated organic pigment dispersion obtained by a process according to claim 11 or 12 for exterior or interior decorative coatings, for automotive coatings or industrial application coatings.
